# EUROPEAN PATENT APPLICATION

(11) **EP 1 231 618 A1**
(43) Date of publication of application: **14.08.2002**
(21) Application number: 01103088.9
(22) Date of filing: 09.02.2001
(51) Int. Cl.: H01G 9/155

(54) **Modularized ultracapacitor energy storage device fabrication process**

(71) Applicant: National Energy Technology Co., Ltd, Chung-Ho City, Tapei (TW)
(72) Inventor: Yang, Chang-Chen, Tapei (TW); Pong, Wei-Te, Taoyuan Hsien (TW); Huang, Yung-Shang, Pan Chiao City, Taipei Hsien (TW); Tsai, Keh-Chi, Saratoga, CA 95070 (US); Lawson, James M., Los Gatos, CA 95032 (US)
(74) Representative: TER MEER STEINMEISTER & PARTNER GbR

(57) **Abstract**

A modularized ultracapacitor energy storage device fabrication process. The process fills and encloses an electrolyte solution in a proper gap between two electrodes to form a power storage unit. A plurality of the power storage units is formed into a stack structure. The power storage units are connected using a conducting gel. The stack structure can be placed in a container to form an ultracapacitor energy storage device. The number of stacking layers of the power storage units can be adjusted according to different needs. Therefore, ultracapacitor energy storage devices with different voltage specifications can be manufacturer on the same production line.

## Description

### BACKGROUND OF THE INVENTION

### Field of Invention

The present invention relates to an ultracapacitor energy storage device fabrication process and, in particular, to a modularized ultracapacitor energy storage device fabrication process.

### Related Art

In general, batteries (such as lithium batteries, NiH batteries, lead acid batteries, and usual dry batteries) are considered as electric energy storage devices and capacitors are power storage devices. The reason is that batteries have more energy storage capacity but a lower power output, while capacitors have less energy storage capacity but a higher power output. Batteries and capacitors have been utilized in different ways by human beings in the past two hundred years. Until recent thirty years when electronic industries are rapidly prospering, electronic products are developed to be lighter, thinner, shorter and smaller but with more functions and higher efficiency. Portability, smallness and convenience have become necessary conditions for electronic products. In order to be portable, sufficient portable power supply becomes the key problem. Energy storage devices with a high energy density and a high power density are highly desirable. The combination of conventional batteries and capacitors are obviously insufficient. Therefore, the ultracapacitor, a new energy storage device with a high energy density and a high power density, is then developed to compensate for the insufficient power density in batteries and the insufficient energy density in capacitors.

Ultracapacitors have several different names. such as ultracapacitors, supercapacitors. dynacapacitors, electric double layer capacitors (EDLCs), capatteries, pseudocapacitors, etc. They have been commercialized by companies in the U.S. and Japan and applied to various military industries. For example, the ultracapacitor that Pinnacle Research Institute, Inc. (PRI) in the U.S. is commissioned to develop by the U.S. DOD and DOE has successfully enters from the phase of experiments to that of small quantity commodity applications. The discharging mechanism of the PRI ultracapacitor is to use the EDLC principle of large surface area electrodes to achieve an energy density (energy storage per unit volume) and a power density (energy releasing speed per unit volume) that are far larger than the prior art. In comparison with the prior art, the ultracapacitor can release 100 times more power and store 20 times more electric power than conventional batteries.

In general, the capacitance in capacitor energy storage devices is generated by separating charges on conductor surfaces. Conventional capacitors use insulating materials or dielectric between two conductors to achieve the separation effect. The EDLC ultracapacitor energy storage device does not have any insulating material to build a dielectric layer. Its charging and energy storage occur at the interface of the electric double layer. A known ultracapacitor energy storage device structure and its manufacturing method, such as the one for the PRI ultracapacitors, can be found in the U.S. Pat. Nos. 5,384,685, 5,464,453, 5,711,988, 5,800,857, and 5,821,033.

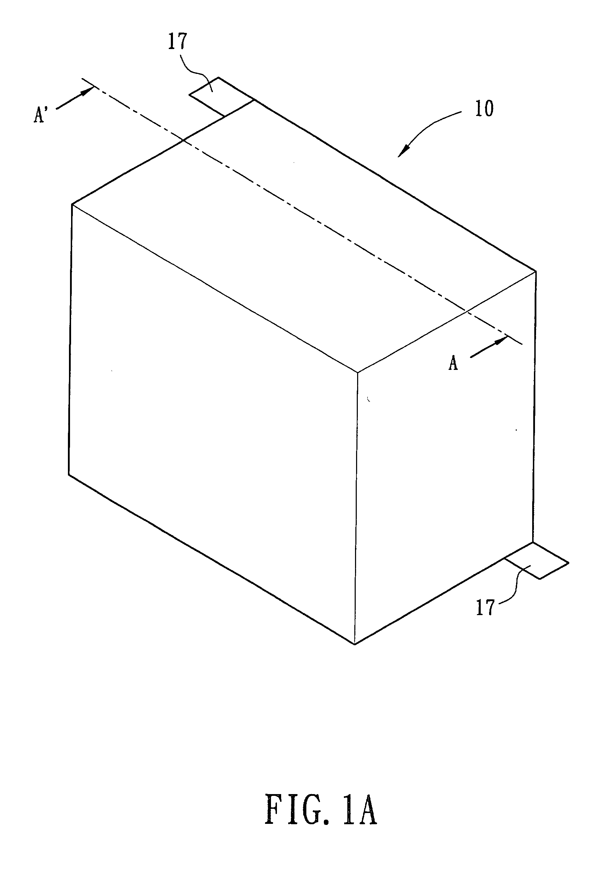

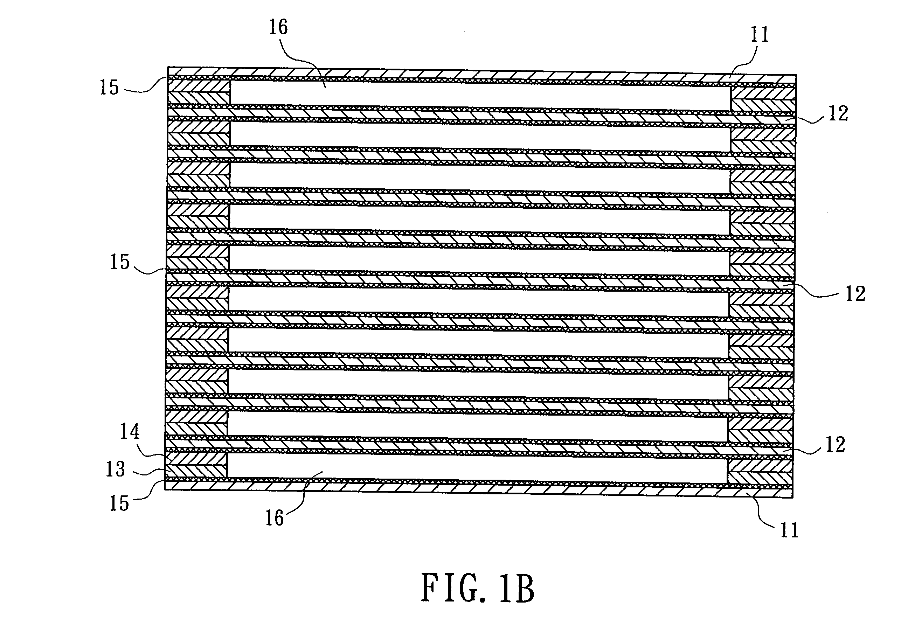

A conventional ultracapacitor energy storage device 10 is shown in FIGS. 1A and 1B. Both the top and bottom of the energy storage device 10 are formed with a conductor chip 17 for electrical connection to the exterior. FIG. 1B is an A-A' cross-sectional view of FIG. 1A. When making the ultracapacitor energy storage device, a certain layers of electrodes 11, 13 (*e.g.*, eleven layers as shown in the drawing) are stacked together according to the voltage specification. Each of the electrode pairs 11, 12 has a gasket 13, 14 sandwiched in between. The inner side of the outermost electrode 11 is formed with a large area coating layer 15. Both the upper and lower surfaces of the electrodes 12 in the middle layers are formed with large area coating layers 15. After forming the stack structure of the electrodes 11, 12 and the gasket 13, heat is provided to the gasket 13 to reflow it so that the electrodes 11, 12 and the gasket 13 are firmly bound together. Finally, an electrolyte solution is provided and enclosed in the gap 16 between the electrodes 11, 12. This then completes the fabrication of the disclosed ultracapacitor energy storage device 10. However, the above procedure is not suitable for modularized manufacturing. When clients have different requirement in voltages and electrode layers, different assembly lines are needed for such products and thus the cost has to be increased. Therefore, it is highly desirable to provide a new fabrication procedure that can solve these problems.

### SUMMARY OF THE INVENTION

Therefore, it is an objective of the invention to provide a modularized ultracapacitor energy storage device fabrication process to lower the production cost.

In accordance with the disclosed fabrication process, an electrolyte solution is filled and enclosed in a proper gap between two electrodes to form a single electric power storage unit. A plurality of the electric power storage units similarly formed is stacked together. The number of layers can be modified according to customer's needs. Therefore, ultracapacitor energy storage devices satisfying different voltage specifications can be manufactured on the same assembly line by stacking different numbers of electric power storage units without the need to greatly modify the fabrication process and equipment.

The disclosed fabrication process for ultracapacitor energy storage devices includes the steps of: providing a plurality of single ultracapacitor electric power storage units, each of the electric power storage units being formed by filling and enclosing an electrolyte solution in a proper gap between two electrodes; stacking and binding the plurality of electric power storage units together using a conductive glue into a stack structure; and forming contact electrodes on the top and bottom of the stack structure.

The above method uses a conductive glue, such as a silver epoxy, to achieve the physical and electrical connections between the electric power units. According to the invention, the plurality of electric power storage units can be stacked in a container. By forming a top plate and a bottom plate in the container as two conductive elastic objects to press the stack structure of the electric power storage units, the physical and electrical connections between the electric power storage units can be achieved.

The fabrication process includes the steps of: providing a plurality of single ultracapacitor electric power storage units, each of the electric power storage units being formed by filling and enclosing an electrolyte solution in a proper gap between two electrodes; providing a container with a top plate and a bottom plate, the inner surface of the top plate having a conductive elastic object and the outer surface of the top plate having a contact electrode with an electrical connection in between, the inner surface of the bottom plate having another elastic object and the outer surface of the top plate having another contact electrode with an electrical connection in between; and stacking the plurality of electric power storage units together in the container to form a stack structure, a top surface and a bottom surface of the stack structure being in contact with the conductive elastic objects and being tightly sandwiched between the top plate and the bottom plate of the container.

### BRIEF DESCRIPTION OF THE DRAWINGS

The present invention will become more fully understood from the detailed description given hereinbelow illustration only, and thus are not limitative of the present invention, and wherein:
FIG. 1A shows a three-dimensional diagram of a conventional ultracapacitor energy storage device;
FIG. 1B is a cross-sectional view of FIG. 1A in the A-A' direction;
FIGS. 2A and 2B show the procedure according to a first embodiment of the disclosed ultracapacitor energy storage device fabrication process, which uses a conductive glue to bind a plurality of stacked electric power storage units together; and
FIG. 3 shows a second embodiment of the disclosed ultracapacitor energy storage device fabrication process, which accommodates a plurality of stacked electric power storage units in a container.

### DETAILED DESCRIPTION OF THE INVENTION

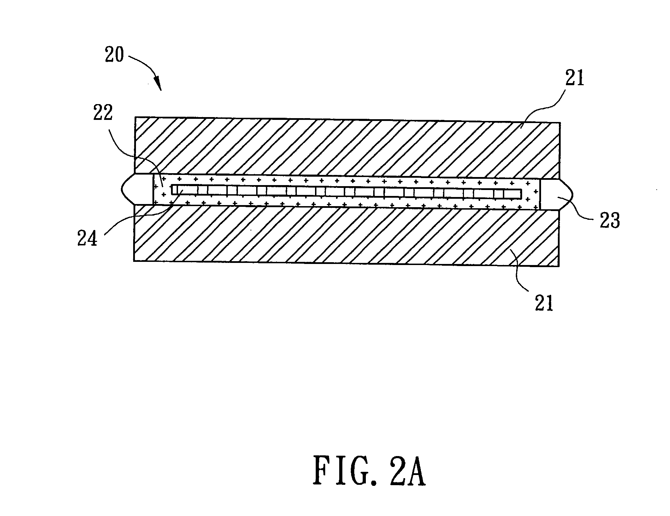

A modularized ultracapacitor energy storage device fabrication process disclosed in the invention is as follows. First, a plurality of single ultracapacitor electric power storage units is provided. Each of the electric power storage units 20, as shown in FIG. 2A, is formed by filling and enclosing an electrolyte solution 22 in a gap between two properly separated electrodes 21. In particular, between the two electrodes is formed with an insulation glue wall 23 to bind the two electrodes 21 together and to enclose the electrolyte solution 22 between the two electrodes 21. The insulation glue wall can be made of high density polyethylene (HDPE), pyrolysis epoxy or other acid-resistant enclosing insulating materials. In a preferred embodiment of the invention, the gap between the two electrodes 21 is disposed with a spacer 24. The material of the spacer 24 can be a porous glass fiber chip as a support structure between the two electrodes 21 so that the electrodes 21 do not bend to form a direct contact.

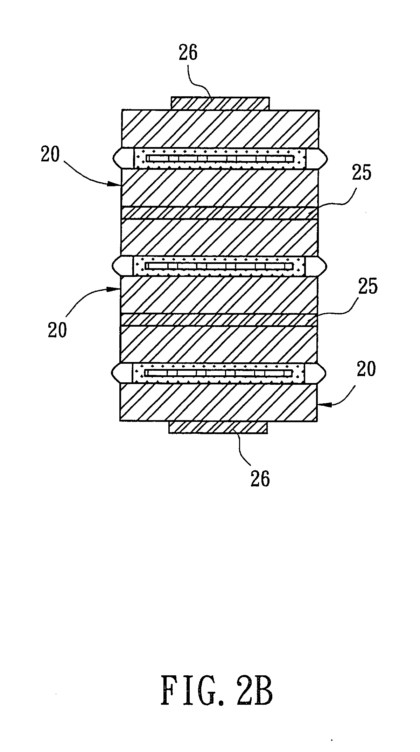

As shown in FIG. 2B, the plurality of electric power storage units 20 is stacked together. The number of the electric power storage units 20 being stacked together is determined according to the specification demanded by the customer. A conductive glue 25 is coated between the stacked electric power storage units 20. The electric power storage units 20 are bound together by the conductive glue 25 to achieve physical and electrical connections between the electric power storage units 20. The conductive glue 25 can be a silver epoxy or other conductive adhesives. Furthermore, a top surface of the top layer of electric power storage unit and a bottom surface of the bottom layer of electric power storage unit in the stack structure of the electric power storage units 20 are formed with a contact electrode 26 for electrical communications with the exterior, respectively. The material of the contact electrodes 26 is preferably a metal with low contact resistance, such as Au.

The above method uses a conductive glue to achieve the physical and electrical connections between the electric power storage units. According to a second embodiment of the invention, however, the plurality of electric power storage units can be stacked in a container. By forming a top plate and a bottom plate in the container as two conductive elastic objects to press the stack structure of the electric power storage units, the same physical and electric connections can be achieved between the electric power storage units too.

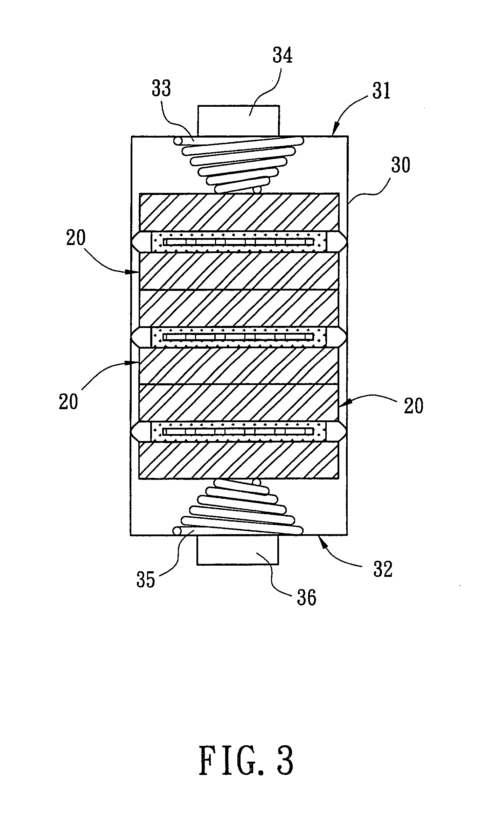

As shown in FIG. 3, the plurality of electric power storage units 20 are stacked and disposed in a container 30 prepared in advance. The horizontal size of the container 30 is close to that of the electric power storage units 20 so that the electric power storage units 20 do not have horizontal slides. The container 30 has a top plate 31 and a bottom plate 32. The inner surface of the top plate 31 is formed with a conductive elastic object 33, *e.g.*, a spring, while the outer surface is formed with a contact electrode 34. The contact electrode 34 is in electrical communications with the conductive elastic object 33. The inner surface of the bottom plate 31 is also formed with another conductive elastic object 35, and the outer surface is also formed with another contact electrode 36. The contact electrode 36 is in electrical communications with the conductive elastic object 35. The two conductive elastic objects 33, 35 are in contact with a top surface and a bottom surface of the stack structure of the electric power storage units 20. Through the elasticity of the two conductive elastic objects 33, 35, the plurality of electric power storage units 20 is sandwiched between the top plate 31 and the bottom plate 32 of the container 30. The container 30 fixes the stack structure of the plurality of electric power storage units 20 to achieve electrical connections, thus forming the ultracapacitor energy storage device.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A modularized ultracapacitor energy storage device fabrication process, which comprises the steps of:
providing a plurality of ultracapacitor electric power storage units, each of the electric power storage units being formed by filling and enclosing an electrolyte solution in a proper gap between two electrodes; and
stacking the plurality of electric power storage units together into a stack structure with a conductive glue coated in between.

2. The process of claim 1 further comprising the step of forming a contact electrode on a top surface of the top layer of electric power storage unit and a bottom of the bottom layer of electric power storage unit in the stack structure.

3. The process of claim 1, wherein the conductive glue is a silver epoxy.

4. A modularized ultracapacitor energy storage device fabrication process, which comprises the steps of:
providing a plurality of single ultracapacitor electric power storage units, each of the electric power storage units being formed by filling and enclosing an electrolyte solution in a proper gap between two electrodes;
providing a container with a top plate and a bottom plate, the inner surface of the top plate having a conductive elastic object and the outer surface of the top plate having a contact electrode with an electrical connection in between, the inner surface of the bottom plate having another elastic object and the outer surface of the top plate having another contact electrode with an electrical connection in between; and
stacking the plurality of electric power storage units together in the container to form a stack structure, a top surface and a bottom surface of the stack structure being in contact with the conductive elastic objects and being tightly sandwiched between the top plate and the bottom plate of the container.

5. The process of claim 4, wherein the conductive elastic object is a spring.

6. A structure for a modularized ultracapacitor energy storage device, which comprises:
a plurality of stacked ultracapacitor electric power storage units, each of the electric power storage units being formed by filling and enclosing an electrolyte solution in a proper gap between two electrodes; and
a conductive glue provided between the electric power storage units for binding the electric power storage units together.

7. The structure of claim 6 further comprising two contact electrodes forming on a top surface of the top layer of electric power storage unit and a bottom surface of the bottom layer of electric power storage unit in the stack structure.

8. The structure of claim 6, wherein the conductive glue is a silver epoxy.

9. A structure for a modularized ultracapacitor energy storage device, which comprises:
a plurality of stacked ultracapacitor electric power storage units, each of the electric power storage units being formed by filling and enclosing an electrolyte solution in a proper gap between two electrodes;
a container with a top plate and a bottom plate, the inner surface of the top plate having a conductive elastic object and the outer surface of the top plate having a contact electrode with an electrical connection in between, the inner surface of the bottom plate having another elastic object and the outer surface of the top plate having another contact electrode with an electrical connection in between; and
a top surface and a bottom surface of the stack structure of the electric power storage units being in contact with the conductive elastic objects and being tightly sandwiched between the top plate and the bottom plate of the container.

10. The structure of claim 9, wherein the conductive elastic object is a spring.
